# EUROPÄISCHE PATENTANMELDUNG

(11) **EP 4 806 308 A1**
(43) Veröffentlichungstag der Anmeldung: **16.09.2026**
(21) Anmeldenummer: 26156816.6
(22) Anmeldetag: 06.02.2026
(51) Int. Cl.: A47J 31/36, A47J 31/46, A47J 31/60

(54) **BRÜHEINHEIT MIT HYDRAULISCHEM AUSSTOSSMECHANISMUS SOWIE GETRÄNKEZUBEREITUNGSVORRICHTUNG MIT EINER SOLCHEN BRÜHEINHEIT UND VERFAHREN ZUM BETRIEB EINER BRÜHEINHEIT**

(30) Priorität: 11.03.2025 DE 102025109259
(71) Anmelder: Eugster/Frismag AG, 8580 Amriswil (CH)
(72) Erfinder: van de Löcht, Hendrik, 8580 Amriswil (CH); Riessbeck, Wolfgang, 8597 Landschlacht (CH)
(74) Vertreter: Patent- und Rechtsanwälte Behrmann Wagner PartG mbB

(57) **Zusammenfassung**

Die Erfindung betrifft eine Brüheinheit für eine Getränkezubereitungsvorrichtung (22), insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brühkammer (03) einen verschiebbar gegenüber einer Brühkammerwand (11) gelagerten Brühkammerboden (06) aufweist, wobei ein erster Hydraulikzylinder (07.1) vorgesehen ist, der den Brühkammerboden (06) vor und/oder während der Getränkeherstellung in Richtung eines, die Brühkammer (03) verschließenden Brühkopfes (04) kraftbeaufschlagt,
dadurch gekennzeichnet,
dass in dem ersten Hydraulikzylinder (07.1) ein zweiter Hydraulikzylinder (7.2) angeordnet ist, der zusammen mit dem ersten Hydraulikzylinder (07.1) eine teleskopartige Verstellung des Brühkammerboden (06) ermöglicht, wobei die Hydraulikzylinder (07.1, 07.2) gemeinsam eine Verstellung des Brühkammerbodens (06) bis zu einem oberen Rand (16) der Brühkammerwand (11) ermöglichen.

## Beschreibung

Die vorliegende Erfindung betrifft eine Brüheinheit für eine Getränkezubereitungsvorrichtung, insbesondere einen Kaffee- und/oder Espressovollautomaten, nach den Merkmalen des Oberbegriffs des Anspruchs 1. Die Erfindung betrifft weiterhin eine Getränkezubereitungsvorrichtung, insbesondere einen Kaffee- und/oder Espressovollautomaten, gemäß des Oberbegriffs des Anspruchs 10. Weiterhin betrifft die vorliegende Erfindung ein Verfahren zum Betrieb einer Brüheinheit für eine Getränkezubereitungsvorrichtung, insbesondere einem Kaffee- und/oder Espressovollautomaten, gemäß des Oberbegriffs des Anspruchs 14.

Aus dem Stand der Technik sind bereits eine Vielzahl von, bevorzugt entnehmbaren, Brüheinheiten für Getränkezubereitungsvorrichtungen, insbesondere Kaffeevollautomaten und/oder Espressovollautoamten bekannt. Die Brüheinheiten unterscheiden sich im Wesentlichen nach der Art und Weise, wie Getränkesubstratmehl zugeführt wird. Es besteht die Möglichkeit Getränkesubstratmehl, beispielsweise Kaffeebohnenmehl lose oder portioniert, insbesondere verkapselt, bereitzustellen.

Im Bereich der Brüheinheiten für Getränkezubereitungsvorrichtungen, die mit losem Getränkesubstratmehl, insbesondere Kaffeebohnenmehl ohne Verkapselung oder Portionsbehälter arbeiten, sind ebenfalls bereits unterschiedliche Konzepte bekannt. Ein weit verbreitetes Konzept ist die sogenannte "Kniehebelbrüheinheit", wobei der Begriff "Kniehebel" aus rein technischer Sicht für solche Brüheinheiten nicht vollständig zutreffend ist.

Die Grundidee derartiger Brüheinheiten ist, dass eine Brühkammer durch Verschwenk- und/oder lineare Translationsbewegungen in unterschiedliche Positionen überführbar ist, wobei für die Abarbeitung eines Getränkebezugs oder die Durchführung eines Brühvorgangs wenigstens eine Mahlposition vorgesehen ist, in der die Brühkammer mit Getränkesubstratmehl befüllt wird oder befüllbar ist. Weiter ist eine Brühposition notwendig, in der die Brühkammer verschlossen ist und Brühfluid in die Brühkammer einströmt und aufgebrühtes oder hergestelltes Getränk aus der Brühkammer abfließen kann. Ferner ist bei sogenannten Vollautomaten eine Ausstoßposition erreichbar, die nach dem Brühvorgang oder Auslaugprozess angefahren wird und dazu dient, dass in der Brühkammer befindliches Getränkesubstratmehl, welches nach dem Brühvorgang auch als Trester bezeichnet wird, aus der Brühkammer entnommen oder entfernt werden kann. Bei Halbautomaten oder sogenannten Siebträgermaschinen, die ebenfalls mit unverpacktem oder nicht-portionierten Getränkesubstratmehl arbeiten, können die vorgenannten Positionen teilweise nur erreicht werden, wenn der Bediener oder Benutzer tätig wird.

Für derartige Brüheinheiten, die beispielsweise zu Reinigungs- oder Wartungszwecken aus dazugehörigen Getränkezubereitungsvorrichtung entnommen und in dieser eingesetzt werden können, bestehen Ansätze, die abgesehen von der Fluidführung des Brühfluids rein mechanisch ausgebildet sind. Dies sorgt jedoch dafür, dass die Brüheinheit insgesamt recht hohe Kräfte aufbringen und ableiten können muss, insbesondere um elastische Rückstellkräfte zu überwinden, die notwendig sind, um die Brüheinheit oder Teile der Brüheinheit, insbesondere die Brühkammer zurückzustellen oder notwendige Betriebsdrücke, wie beispielweise Tamperdrücke, zu erreichen. Dementsprechend wird auch ein relativ starker Antrieb aufseiten der Getränkezubereitungsvorrichtung benötigt, der die rein mechanischen Brüheinheiten und die dazugehörige Antriebsmechanik betätigt oder antreibt.

Ein weiterer Grund, weshalb hohe Kräfte in rein mechanisch angetriebenen Brüheinheiten auftreten ist der Umstand, dass sichergestellt werden muss, dass dem relativ hohen Innendruck innerhalb der Brühkammer während des Brühprozesses entsprechend äußere Kräfte entgegenwirken, auch um das Brühkammervolumen während des Brühprozesses konstant zu halten oder nur minimal zu vergrößern.

Aus dem Stand der Technik sind ebenfalls bereits Ansätze von sogenannten Brüheineheiten bekannt, bei denen zusätzlich zur Fluidführung des Brühfluids hydraulische Komponenten genutzt werden, um die Verstellung der Brüheinheit zwischen den unterschiedlichen Positionen zu bewirken oder zu unterstützen. Derartige Ansätze sind aber weitestgehend auf "Kapselsysteme" oder "Siebträgersysteme" beschränkt und lassen sich nicht ohne weiteres auf andere Typen oder Gattungen übertragen.

Über hydraulische Komponenten lassen sich gewisse Vorteile erreichen. Gleichzeitig neigen hydraulische Komponenten jedoch zu einem erhöhten Steuerungsbedarf oder Steueraufwand, da in derartigen Brüheinheiten nicht nur eine mechanische Antriebsmechanik betrieben werden muss, sondern auch zu gewissen Zeiten im Brühvorgang oder ähnlichen Vorgängen, wie beispielsweise Spül- oder Reinigungsprozessen, auch die hydraulischen Komponenten entsprechend angesteuert werden müssen und insbesondere mit Hydraulikfluid beaufschlagt, belüftet oder entleert werden müssen.

DE 198 48 370 A1 betrifft eine Vorrichtung und ein Verfahren zur Zubereitung eines Kaffeeaufgusses. Darin ist eine Brüheinheit beschrieben, die komplett hydraulisch angetrieben und lediglich mechanisch geführt wird. Das Dokument lehrt in diesem Zusammenhang ein erstes Teleskopelement und ein zweites Teleskopelement. Jedoch werden diese Teleskopelemente von einem einzigen Hydraulikzylinder, nämlich angetrieben über die Füllung und Entleerung der als Hohlraum bezeichneten Zylinderkammer, genutzt, um die Brühkammer und den Ausstoßer innerhalb der Brühkammer anzutreiben. Die Bewegung des Ausstoßers innerhalb des "Teleskopbauteils" wird über unterschiedlich harte Federn realisiert, sodass beim Befüllen des Hohlraums/Hydraulikzylinders zunächst eine Verstellung der Brühkammer gegenüber dem Ausstoßer erfolgt, bevor dann die gesamte Brühkammer entlang der mechanischen Führung angetrieben wird. Die Verstellung erfolgt dabei vollständig hydraulisch ohne mechanischen Antrieb.

Ausgehend von diesem Stand der Technik ist es die Aufgabe der vorliegenden Erfindung, eine Brüheinheit, eine Getränkezubereitungsvorrichtung mit einer, bevorzugt entnehmbaren, Brüheinheit sowie ein Verfahren zum Betrieb einer Brüheinheit vorzuschlagen, die die Nachteile im Stand der Technik überwinden, insbesondere eine weiterführende hydraulische Integration bereitstellen, ohne dass dadurch ein besonders hohes Ausmaß an zusätzlicher Steuerung notwendig wird.

Diese Aufgabe wird im Hinblick auf eine Brüheinheit für eine Getränkezubereitungsvorrichtung mit den Merkmalen des Anspruchs 1 gelöst. Bezüglich der Getränkezubereitungsvorrichtung wird die Aufgabe mit den Merkmalen des Anspruchs 10 gelöst. Im Hinblick auf ein Verfahren zum Betrieb einer Brüheinheit wird die Aufgabe mit den Merkmalen des Anspruchs 14 gelöst.

Vorteilhafte Ausführungsformen der Erfindung sind Gegenstand der nachfolgenden Beschreibung, der Figuren, der Figurenbeschreibung sowie der Zeichnungen.

Insgesamt, auch zur Vermeidung von unnötigen Wiederholungen, sollen alle nachfolgenden vorrichtungsmäßig offenbarten Merkmale auch als entsprechend verfahrensmäßig offenbart und beanspruchbar gelten, sowie umgekehrt.

Die Brüheinheit gemäß der vorliegenden Erfindung, welche für eine Getränkezubereitungsvorrichtung, insbesondere einen Kaffee- und/oder Espressovollautomaten, geeignet ist, umfasst eine Antriebsmechanik, zum Verschwenken und/oder linearen Verfahren einer Brühkammer zwischen mehreren Positionen, wobei die Brühkammer einen verschiebbar gegenüber einer Brühkammerwand gelagerten Brühkammerboden aufweist, wobei ein erster Hydraulikzylinder vorgesehen ist, der so mit dem Brühkammerboden wirkverbunden ist, dass der Hydraulikzylinder den Brühkammerboden vor und/oder während der Getränkeherstellung in Richtung eines, die Brühkammer verschließenden Brühkopfes kraftbeaufschlagt.

Erfindungsgemäß ist zudem vorgesehen, dass in dem ersten Hydraulikzylinder ein zweiter Hydraulikzylinder angeordnet ist, der zusammen mit dem ersten Hydraulikzylinder eine teleskopartige Verstellung des Brühkammerbodens gegenüber der Brühkammerwand ermöglicht, wobei die Hydraulikzylinder gemeinsam eine Verstellung des Brühkammerbodens bis zu einem oberen Rand der Brühkammerwand ermöglichen.

Die vorliegende Erfindung hat auf überraschende Art und Weise erkannt, dass bei einer ineinander geschachtelten, Serienschaltung vor zwei einzelnen Hydraulikzylindern, die eine teleskopartige Verstellung des Brühkammerbodens erlauben in einfacher und kompakter Bauweise die hydraulischen Funktionen und Funktionalitäten der Brüheinheit erweitert werden können, ohne dabei besonderen baulichen Aufwand oder besonders hohen Aufwand bezüglich der Steuerung oder Ansteuerung der hydraulischen Bestandteile, insbesondere der Hydraulikzylinder, vorsehen oder realisieren zu müssen.

Die beiden, ineinander geschachtelten oder ineinander angeordneten zwei Hydraulikzylinder können so ausgeführt sein, dass der zweite Hydraulikzylinder vollständig in den Kolben eines ersten Hydraulikzylinders integriert ist und der zweite Hydraulikzylinder dementsprechend mit der Bewegung oder Verstellen des ersten Hydraulikzylinders mitbewegt oder mitverstellt wird, selbst wenn der zweite Hydraulikzylinder selbst nicht aktiviert oder mit Hydraulikfluid gefüllt wird. Der zweite Hydraulikzylinder kann dementsprechend mit einem geringeren oder kleineren Durchmesser oder Querschnitt ausgebildet sein, als der erste Hydraulikzylinder. In besonders vorteilhafter Weise ergibt sich daraus auch ein abgestuftes Druckniveau, bei dem die jeweiligen Hydraulikzylinder aktiviert werden und es kann sichergestellt werden, dass bei einem ansteigen Innendruck zunächst der erste, größere Hydraulikzylinder aktiviert wird und einen Hub durchführt oder eine Verstellung bewirkt, bevor bei weiter ansteigendem Innendruck in dem Hydraulikzylinder bzw. den Hydraulikzylindern der zweite, kleinere Hydraulikzylinder einen Hub ausführt oder betätigt wird. Dadurch wird die Teleskopverstellung des Brühkammerbodens lediglich über die Druckverhältnisse in den Hydraulikzylindern und ohne weitere Steuer- oder Regelungsmechanismen gesteuert.

Die Erfindung erreicht zudem den Vorteil, dass unterschiedliche Tätigkeiten und Funktionen, die im Rahmen von Brühprozessen sowie im Rahmen vor Spül- und Reinigungsprozessen der Brüheinheit im Zusammenhang mit einer Verstellung oder Bewegung des Brühkammerbodens stehen, im Wesentlichen durch die Hydraulikzylinder bereitgestellt oder verwirklicht werden, die beispielsweise das Getränkesubstratmehl verdichten können, während des Brühprozesses ein ausreichender Gegendruck zum Innendruck der Brühkammer bereitstellen können, nach dem Brühprozess zum Auswerten des Tresters oder ausgelaugten Getränkesubstratmehls den Brühkammerboden bis zu einem Rand des Brühkammermantels verstellen können sowie gegebenenfalls bei Reinigungs- oder Spülprozessen die Größe des zu spülenden Volumens vorgeben können.

Bevorzugt kann vorgesehen sein, dass eine Brühkammerwand unmittelbar mit einem Gehäuse oder einer Außenwand des ersten, größeren Hydraulikzylinders verbunden, beispielsweise verschraubt ist.

In einer ersten, vorteilhaften Ausführungsform der Brüheinheit kann vorgesehen sein, dass die Antriebsmechanik zur Verstellung der Brühkammer in eine Brühstellung eingerichtet ist, wobei die Antriebsmechanik so ausgebildet ist, dass allein über die Antriebsmechanik, insbesondere ohne Verstellung oder Betätigung der Hydraulikzylinder oder des Hydraulikzylinders, die Brühkammer, insbesondere die Brühkammerwand, zur dichtenden Anlage an den Brühkopf bringbar ist. Dies ermöglicht den Vorteil, dass die Brühkammer kraftlos geschlossen werden kann. Denn es müssen keine Anpresskräfte bereitgestellt oder Rückstellkräfte überwunden werden. Dadurch wird ein - bevorzugt geräteseitiger - Antrieb für die Antriebsmechanik ermöglicht, der verhältnismäßig geringe Kräfte und Drehmomente aufbringen muss und zudem energiesparend ausgeführt ist. Weiterhin wird dadurch ermöglicht, dass die Antriebsmechanik nur einen verhältnismäßig geringen Verstellweg, beispielsweise einen maximalen linearen Verstellweg von weniger als 60mm, bevorzugt weniger als 50mm überbrücken können oder zurücklegen können muss. Dies führt vorteilhaft dazu, dass die Brüheinheit kompakt ausgeführt werden kann. Weiter erleichtert diese Ausgestaltung der Antriebsmechanik die Ansteuerung der Brüheinheit. Denn das Öffnen, Schließen und gegebenenfalls Entspannen/Belüften der Brühkammer, insbesondere gegenüber dem Brühkopf kann dann mechanisch bewerkstelligt werden. Das Verfahren des Brühkammerbodens, sowohl zum Druckaufbau innerhalb der Brühkammer als auch zum Auswurf des Tresters oder des ausgelaugten Getränkesubstratmehls kann dann hydraulisch bewerkstelligt und entsprechend gesteuert werden.

Weiterhin kann besonders vorteilhaft vorgesehen sein, dass der erste Hydraulikzylinder und/oder der zweite Hydraulikzylinder mit einer Federeinheit vorgespannt ist/sind, welche einem Ausfahren oder Verstellen des Hydraulikzylinders entgegenwirkt/entgegenwirken. Vorteilhaft kann jeder Hydraulikzylinder eine eigene Federeinheit aufweisen. Besonders bevorzugt können Wendelfedern eingesetzt werden, die sich an beweglichen Kolben der Hydraulikzylinder abstützen. Dies bringt den Vorteil mit sich, dass beim Entspannen oder Belüften einer Hydraulikfluidzuleitung, die bevorzugt auch gleichzeitig als Brühfluidzuleitung ausgebildet ist, das Hydraulikfluid oder Brühfluid vollständig oder zumindest weitestgehend selbsttätig durch die Rückstellkraft der Federeinheiten aus dem Hydraulikzylinder, insbesondere den Hydraulikzylindern, ausgeleitet werden kann. Durch eine dosierte Entspannung oder Belüftung kann auch dosiertes oder gesteuertes Zurückfahren der Hydraulikzylinder realisiert werden, insbesondere jedoch ohne dass eine Pumpe oder sonstige Fördereinrichtungen des Hydraulikfluids ihre Förderrichtung ändern muss oder überhaupt aktiviert werden muss.

In einer weiteren, besonders bevorzugten Ausgestaltung der Brüheinheit kann vorgesehen sein, dass dem ersten Hydraulikzylinder ein Anschlag zugeordnet ist, der den Hub des ersten Hydraulikzylinders begrenzt und bei weiter ansteigendem Innendruck in dem Hydraulikzylinder den zweiten Hydraulikzylinder aktiviert oder betätigt. Dadurch wird in besonders vorteilhafter Weise eine Freigabe oder Betätigung des zweiten Hydraulikzylinders vom Bewegungszustand oder von der Position des ersten Hydraulikzylinders abhängig gemacht, insbesondere wenn der zweite Hydraulikzylinder einen kleineren wirksamen hydraulischen Querschnitt aufweist, als der erste Hydraulikzylinder. Dadurch kann in besonders vorteilhafter Weise realisiert werden, dass der zweite Hydraulikzylinder nur in gewissen und gewollten Situationen aktiviert und freigegeben wird, beispielsweise wenn über einen maximalen Hub der beiden Hydraulikzylinder der Trester oder das ausgelaugte Getränkesubstratmehl bis zu einem oberen Rand der Brühkammer, insbesondere des Brühkammermantels angehoben werden soll.

Besonders bevorzugt kann in diesem Zusammenhang vorgesehen sein, dass der Anschlag so positioniert ist, dass der erste Hydraulikzylinder den Anschlag nicht erreicht, wenn in der Brühkammer, insbesondere in einer Verschlussposition, zwischen Brühkammerboden und Brühkopf eine Mindestportion eines Getränkesubstratmehls, insbesondere Kaffeebohnenmehl, angeordnet ist oder der Innendruck innerhalb der in der Verschlussposition befindlichen Brühkammer einen Wert annimmt, der merklich über dem Atmosphären- oder Umgebungsdruck liegt. Über die bevorzugte Positionierung des Anschlags kann sichergestellt werden, dass während des Verdichtens des Getränkesubstratmehls, dem sogenannten Tampern, sowie während dem Brühvorgang selbst lediglich der erste Hydraulikzylinder aktiviert und verstellt wird und dadurch die Position des Brühkammerbodens beeinflusst. Mit anderen Worten ausgedrückt bedeutet dies, dass nur bei einer in einer Öffnungsposition befindlichen Brühkammer, auf die weder eine Mindestportion an Getränkesubstratmehl oder ein Innendruck der geschlossenen Brühkammer einwirken, der zweite Hydraulikzylinder aktiviert werden kann, da der erste Hydraulikzylinder an dem Anschlag zur Anlage kommt.

Dadurch wird in besonders vorteilhafter Weise sichergestellt, dass der zweite Hydraulikzylinder im Wesentlichen als "Auswurfzylinder" und/oder "Spülzylinder" fungiert und dazu dient den Brühkammerboden bis zu einem Rand des Brühkammermantels zu verstellen, um von dieser Stelle aus Getränkesubstratmehl oder Trester zu entfernen, insbesondere abzustreifen oder eine Spülvolumen zu minimieren, wie unten noch im Detail erläutert.

In einer weiteren, besonders vorteilhaften Ausgestaltung der Brüheinheit kann zudem vorgesehen sein, dass der erste Hydraulikzylinder und der zweite Hydraulikzylinder einen, bevorzugt gemeinsamen, Fluideinlass aufweisen, der fluidleitend mit einer Brühfluidzuleitung der Getränkezubereitungsvorrichtung verbindbar ist, wobei die Hydraulikzylinder mit einem ausgangsseitigen, ebenfalls bevorzugt gemeinsamen, Gegendruckventil versehen sind, welche in fluidleitender Verbindung mit der Brühkammer ausgebildet ist und welches beim Überschreiten eines Grenzdrucks die Zufuhr von Brühfluid in die Brühkammer freigibt, sodass Brühfluid aus dem Hydraulikzylinder abließt und in die Brühkammer einströmt.

Durch die genannte Ausbildung wird in vorteilhafter Weise erreicht, dass es innerhalb der Brüheinheit im Wesentlichen nur einen Fluidpfad gibt, der grundsätzlich nur ein Fluid, führt, und bei dem dementsprechend auch keine Verzweigungen einschließlich evtl. notweniger Ventile zur Steuerung der Verzweigung von Fluidpfaden notwendig sind.

Mit anderen Worten ausgedrückt bedeutet dies, dass eine bevorzugt geräteseitige Fördereinrichtung, beispielsweise eine Brühfluidpumpe, Brühfluid zunächst in die Brüheinheit und von dort in die Hydraulikzylinder einleitet. Die Hydraulikzylinder füllen sich mit Brühfluid und vergrößern dabei ihr Volumen, bis entweder ein entsprechender Anschlag erreicht oder ansonsten ein Maximalhub gegeben ist oder bis ein Gegendruckventil beim Überschreiten eines vorgegebenen Grenzdrucks innerhalb der Hydraulikzylinder eine fluidleitende Verbindung zwischen den Hydraulikzylindern und der Brühkammer freigibt. Sofern dann weiter Brühfluid von der Fördereinrichtung bereitgestellt wird, kann Brühfluid von den Hydraulikzylindern in die Brühkammer übertreten und dadurch den Innendruck in der Brühkammer aufbauen. Bevorzugt wird beim Überschreiten eines Innendrucks in der Brühkammer ein Auslassventil, bevorzugt ein sogenanntes Cremaventil, geöffnet. Das vom Brühfluid zum Getränk umgewandelte Fluid kann dann über das Auslassventil und einem nachgelagerten Auslass die Brüheinheit verlassen.

Sobald der Innendruck in der Brühkammer unter den Grenzwert des Auslassventils abfällt, wird dieses wieder verschlossen oder verschließt sich selbsttätig. Auch sobald der Innendruck in den Hydraulikzylindern den Grenzdruck des Gegendruckventils unterschreitet, schließt dieses selbsttätig.

In vorteilhafter Weise ist die Antriebsmechanik dazu eingerichtet die Brühkammer in verschiedene Stellungen oder Position zu überführen. Dazu gehören bevorzugt aber nicht zwingend abschließend: Eine Mahlposition, eine Brühposition, Spülposition, Abstreifposition.

Gemäß einer weiteren, besonders vorteilhaften Variante der Brüheinheit kann vorgesehen sein, dass die Antriebsmechanik zum Erreichen einer ersten Spülstellung der Brühkammer eingerichtet ist, wobei in der ersten Spülstellung ein Auslassventil, insbesondere ein Cremaventil des Brühkopfes oder der Brühkammer, zwangsgeöffnet oder umgehbar ist, sodass eine Spülung der Brühkammer ermöglicht wird, ohne dass ein Innendruck in der Brühkammer aufgebaut wird. Besonders bevorzugt kann in diesem Zusammenhang vorgesehen sein, dass die Brühkammer selbst oder Elemente der Brühkammer eine mechanische Zwangsöffnung des Auslassventils durch eine Verstellung der Antriebsmechanik und eine dadurch bedingte Bewegung der Brühkammer bewirken, sodass allein über die Antriebsmechanik - gegebenenfalls betätigt über einen geräteseitigen Antrieb - die erste Spülstellung und damit die Zwangsöffnung oder Umgehung des Auslassventils erreicht wird. Diese Ausgestaltung hat den besonderen Vorteil, dass wenn in der geschlossenen Brühkammer - die Brühkammerwand liegt dichtend am Brühkopf an - eine Spülung der Brühkammer mit einem minimalen Volumen an Spülfluid, insbesondere Spülflüssigkeit durchgeführt werden kann. Denn besonders vorteilhaft wird bei einem kurzgeschlossenen oder zwangsgeöffneten Auslassventil der Brühkammer oder des Brühkopfes bei einem Druckaufbau im ersten Hydraulikzylinder durch Einströmen des Brühfluid/Hydraulikfluid der erste Hydraulikzylinder bis zum Maximalhub, beispielsweise begrenzt durch einen Anschlag, verstellt, weil sich im Inneren der Brühkammer kein Gegendruck, weder durch Getränkesubstratmehl, noch durch ein Luftpolster, aufbauen kann. Der Maximalhub des ersten Hydraulikzylinders ist, zum Beispiel durch einen mechanischen Anschlag begrenzt. Bei weiter ansteigendem Innendruck in den Hydraulikzylinder wird dann der zweite Hydraulikzylinder freigegeben, mit Hydraulikfluid/Brühfluid gefüllt und dadurch der Brühkammerboden weiter - teleskopisch - angehoben und das Brühkammervolumen wird weiter verkleinert. Dies kann beispielsweise ebenfalls erfolgen, bis der zweite Hydraulikzylinder den Brühkammerboden bis fast an eine Innenoberfläche des Brühkopfs verstellt oder verfahren hat. Erst dann wird bei steigendem Druck das Gegendruckventil am Übergang zwischen den Hydraulikzylindern und der Brühkammer freigegeben und es strömen in diesem Fall als Spülfluid wirkendes Hydraulikfluid/Brühfluid in eine Brühkammer mit minimalem Volumen. Durch die Verstellung des Brühkammerbodens über fast die gesamte Höhe der Brühkammerwand, sind Verschmutzungen oder Anhaftungen in die verbleibende Brühkammer mit minimalem Volumen transportiert oder mitgenommen worden und können mit dementsprechend minimalem Spülvolumen ausgespült werden. Dadurch wird ein Spülbetrieb erlaubt, der ein absolutes Mindestmaß an Fluid, insbesondere Flüssigkeit, verbraucht. Dies kommt auch Auffangbehältern, wie beispielsweise einer Tropfschale zugute, die dann weniger Spülflüssigkeit aufnehmen muss und entweder kleiner ausgeführt werden kann oder seltener entleert werden muss.

In einer weiter, besonders vorteilhaften Ausgestaltung kann, wie oben bereits angedeutet, vorgesehen sein, dass während eines Spülens der Brühkammer in einer ersten Spülstellung der Brühkammer der erste und der zweite Hydraulikzylinder befüllt sind und der Brühkammerboden einen minimlaen Abstand zum Brühkopf aufweist, wobei der Abstand bevorzugt weniger als 2mm, besonders bevorzugt weniger als 1mm beträgt, sodass lediglich eine Brühkammer mit minimalem Volumen verbleibt.

Für den Mindestabstand zwischen Brühkopf und Brühkammerboden kann gegebenenfalls ein Abstandshalter vorgesehen sein, der sich vom Brühkammerkopf aus erstreckt, bei einer Befüllung der Brühkammer mit Getränkesubstratmehl keine oder keinen merklichen Einfluss hat, gleichzeitig jedoch sicherstellt, dass im geschlossenen Zustand der Brühkammer immer ein Mindestabstand zwischen Brühkammerboden und einer Innenoberfläche des Brühkopfes verbleibt.

Eine weitere alternative oder additive Ausgestaltung der Brüheinheit kann vorsehen, dass der Antriebsmechanismus zum Erreichen einer zweiten Spülstellung der Brühkammer eingerichtet ist, wobei in der zweiten Spülstellung ein Auslassventil, insbesondere ein Cremaventil, des Brühkopfes oder der Brühkammer erst beim Überschreiten eines Grenzdrucks öffnet, sodass eine Spülung der Brühkammer ermöglicht wird, die gegen ein Innendruck der Brühkammer bevorzugt einen Innendruck eines Luftpolsters in der Brühkammer, wirkt. Die zweite Spülstellung kann bevorzugt durch die Antriebsmechanik selbst erreicht werden und durch eine spezielle Position der Brühkammer gegenüber dem Brühkopf charakterisiert sein, in der zwar die Brühkammer grundsätzlich geschlossen ist und der Brühkopf dichtend an der Brühkammerwand anliegt, gleichzeitig jedoch die Brühkammer das Auslassventil nicht kurzschließt, zwangsöffnet oder umgeht. In dieser Stellung der Antriebsmechanik und der Brühkammer führt eine Druckerhöhung in den Hydraulikzylindern im Wesentlichen zu einer Art "leerem Brühvorgang". Durch ein Luftpolster in der Brühkammer in der Verschlussposition wird mit zunehmendem Druck in den Hydraulikzylinder ein entsprechender Gegendruck in der Brühkammer aufgebaut. Dieser führt dazu, dass der erste Hydraulikzylinder den Anschlag nicht erreicht, vergleichbar zu einem Brühvorgang, in dem im Wesentlichen das Verdichten des Getränkesubstratmehls den Gegendruck erzeugt.

Bei weiterem Erhöhen des Innendrucks in den Hydraulikzylindern wird das Gegendruckventil zwischen Hydraulikzylindern und Brühkammer freigegeben. In dieser Situation ist der zweite Hydraulikzylinder jedoch nicht aktiviert oder ausgefahren, sodass der Brühkammerboden auf einem Niveau verbleibt, in dem das Brühkammervolumen ähnlich zu dem eines Brühvorgangs mit wenig Getränkesubstratmehl ist. Ein Einströmen von als Spülfluid wirkendem Hydraulikfluid/Brühfluid führt dann dazu, dass die Brühkammer mit einem verhältnismäßig großen Volumen gespült wird. Dies wiederum kann dazu führen, dass einerseits Verunreinigungen, Anhaftungen oder Restpartikel aus der Brühkammer entfernt werden, kann aufgrund des größeren Volumens von Spülfluid aber auch dazu führen, dass mehr thermische Energie oder Wärme von dem Spülfluid auf die Brühkammer übergeht. Dies bedeutet mit anderen Worten ausgedrückt, dass dadurch neben der Spülung und Reinigung auch eine Aufwärmung oder Vorwärmung der Brühkammer ermöglicht wird. Dementsprechend bietet sich die zweite Spülstellung für eine Inbetriebnahme der Brüheinheit und/oder der Getränkezubereitungsvorrichtung an, wohingegen sich die erste Spülstellung bevorzugt für eine Zwischenspülung zwischen Getränkebezügen eignet. Bei einer Inbetriebnahme ist es besonders vortielhaft, wenn vor dem ersten Getränkebezug die Brühkammer vorgewärmt wird, da sonst das erste Getränk eine gewünschte Ausgabetemperatur nicht erreichen kann, da zu viel Wärme des Brühfluids von der "kalten" Brühkammer aufgenommen und dem Brühfluid/Getränk entzogen wird.

Die oben genannte Aufgabe wird auch durch eine Getränkezubereitungsvorrichtung, insbesondere einen Kaffeevollautomaten, mit einer, insbesondere entnehmbaren, Brüheinheit und einem fest verbauten Antrieb zum Antrieb einer Antriebsmechanik der Brüheinheit gelöst, wobei der Antrieb Kopplungsmittel zum, bevorzugt lösbaren Koppeln mit der Brüheinheit umfasst. Erfindungsgemäß ist dabei vorgesehen, dass eine Brüheinheit gemäß einer der vorangehend beschriebenen Ausführungsformen umfasst ist.

Der Antrieb kann zum Beispiel als elektromotorischer Antrieb ausgebildet sein. Der Antrieb kann dann mit elektrischer Energie betrieben werden, die auch zum Betrieb eines Heizmittels und/oder einer Mahleinheit bereitgestellt und verwendet wird. Es kann aber auch vorteilhaft vorgesehen sein, dass ein mechanischer, beispielsweise ein händischer oder handbetriebener Antrieb vorgesehen ist.

Um Wiederholungen zu vermeiden, wird zu den Vorteilen, vorteilhaften Wirkungen und Ausführungsformen auf die vorangehende Beschreibung Bezug genommen. Besonders hervorhebenswert ist jedoch, dass mit der erfindungsgemäßen Brüheinheit insgesamt eine Getränkezubereitungsvorrichtung ermöglicht wird, die ein verhältnismäßig kleindimensionierten und wenig leistungsstarken Antrieb erfordert, weil der Antrieb im Wesentlichen die Brühkammer kraftlos verschwenkt und/oder linear verfährt. Wie oben bereits erwähnt, kann der Antrieb als elektromotorischer Antrieb oder alternativ als mechanischer, bevorzugt händischer oder manueller Antrieb ausgebildet sein.

Die wesentlichen Schritte, oder Funktionen, die erhebliche Kräfte aufbauen, erzeugen oder ableiten werden hingegen von der Hydraulik, insbesondere den zwei teleskopartig verfahrbaren Hydraulikzylindern bewerkstelligt. Dadurch kann der Antrieb und damit die Getränkezubereitungsvorrichtung klein und platzsparend ausgestaltet werden. Zudem wird eine energiesparende Getränkezubereitungsvorrichtung ermöglicht, weil hydraulische Kräfte und Drücke energieeffizient erzeugt werden können, als rein mechanische Kräfte. Weiterhin werden die hydraulischen Drücke, gerade während des Brühvorgangs bevorzugt von einer Pumpe erzeugt oder bereitgestellt, die für den Brühvorgang ohnehin Fluid mit hohen Drücken beaufschlagen oder fördern muss.

In einer vorteilhaften Ausführungsform der Getränkezubereitungsvorrichtung kann vorgesehen sein, dass eine Sensorik zur Bestimmung der Position des Brühkammerbodens, insbesondere zur Erkennung des Erreichens des Brühkammerbodens an einem oberen Rands der Brühkammerwand umfasst ist. Dadurch kann sichergestellt werden, dass gewisse Funktionen oder Abläufe nur initiiert oder durchgeführt werden, wenn sichergestellt ist, dass sich der Brühkammerboden in einer korrekten oder gewünschten Position befindet. So kann beispielsweise vorgesehen sein, dass ein Abstriefer zum Abstreifen von Trester nur aktiviert wird, wenn der Brühkammerboden an einem obern Rand der Brühkammerwand angelangt ist.

Vorteilhaft kann eine Sensorik vorgesehen sein, die die Position des Brühkammerbodens mittels einer Überwachung und/oder Auswertung eines Fluss- oder Volumenmessers in einer Brühfluidzuleitung bestimmt. Da der Fluss durch oder in der Brühfluidzuleitung zu gewissen Zeiten direkt in eine Verstellung der Hydraulikzylinder umgerechnet werden kann, kann die Überwachung des Flusses oder der Volumina indirekt die Position des Brühkammerbodens erfassen.

Alternativ kann auch vorgesehen sein, dass der Brühkammerboden einen Magneten umfasst, der mit einem Reed-Sensor der Getränkezubereitungsvorrichtung wirkverbunden ausgebildet ist, um die Position des Brühkammerbodens, insbesondere des Erreichen eines oberen Randes der Brühkammerwand, zu detektieren. Dadurch kann sichergestellt werden, dass beispielsweise ein Auswerfer, bevorzugt ein Abstreifer oder Abstreicher der Brüheinheit erst aktiviert wird, um Trester oder ausgelaugtes Getränkesubstratmehl abzustreifen, wenn der Reed-Sensor erkennt, dass der Brühkammerboden eine entsprechende Endposition erreicht hat. Dadurch wird eine Fehlfunktion sicher vermieden.

In einer weiteren, besonders vorteilhaften Ausgestaltung der Getränkezubereitungsvorrichtung kann vorgesehen sein, dass eine lösbare Kopplung eine Brühfluidzuleitung der Getränkezubereitungsvorrichtung mit der Brüheinheit verbindet, wobei die Kopplung eine Koppelstelle auf Seiten der Brüheinheit und eine Koppelstelle auf Seiten der Getränkezubereitungsvorrichtung umfasst, und wobei die Kopplung beweglich gegenüber der Brüheinheit und der Getränkezubereitungsvorrichtung und unbeweglich gegenüber der Brühkammer ausgebildet ist und dadurch zusammen mit der Brühkammer verstellt wird, wobei insbesondere die Koppelstelle der Getränkezubereitungsvorrichtung von der Koppelstelle der Brüheinheit angetrieben wird. Dies ermöglicht, dass die Antriebsmechanik der Brühkammer die Koppelstelle der Getränkezubereitungsvorrichtung steuert und die Koppelstelle der Brüheinheit dementsprechend als Mitnehmer für die Koppelstelle der Getränkezubereitungsvorrichtung dient. Dadurch wird eine passive Führung und Steuerung der Koppelstellen, insbesondere der Koppelstelle auf Seiten der Getränkezubereitungsvorrichtung ermöglicht und somit ein separater Antrieb der Koppelstelle, insbesondere auf Seiten der Getränkezubereitungsvorrichtung überflüssig.

In einer weiteren, besonders vorteilhaften Ausgestaltung kann vorgesehen sein, dass die Kopplung ausschließlich zur Entnahme der Brüheinheit aus der Getränkezubereitungsvorrichtung lösbar ist. Dies ermöglicht in besonders vorteilhafterweise, dass die Anzahl an Löse- und Koppelvorgängen der Koppelstellen minimiert wird. Anders als bei anderen Verbindungen zwischen Getränkezubereitungsvorrichtung und deren Brüheinheit wird dann nicht bei jedem Brühvorgang beim Erreichen der Brühposition und beim Verlassen der Brühposition eine Kopplung der Brühfluidzuleitung hergestellt und gelöst, sondern die Kopplung bleibt so lange aufrechterhalten, bis die Brüheinheit aus der Getränkezubereitungsvorrichtung entnommen wird. Dadurch wird auf besonders vorteilhafte Weise der Verschleiß der Koppelstellen minimiert, die Langlebigkeit der Koppelstellen verbessert und dadurch eine ungewollte Leckage im Bereich der Koppelstellen langfristig vermieden.

Die oben genannte Aufgabe wird auch durch ein Verfahren zum Betrieb einer Brüheinheit für eine Getränkezubereitungsvorrichtung, insbesondere ein Kaffee- und/oder Espressovollautomaten, gelöst, bei dem mit einer Antriebsmechanik eine Brühkammer zwischen mehreren Positionen verschwenkt und/oder linear verfahren wird, wobei die Brühkammer eine verschiebbar gegenüber einer Brühkammerwand gelagerten Brühkammerboden aufweist, der während einer Getränkeherstellung in eine Tamperposition und zum Abschluss der Getränkeherstellung in eine Ausstoßposition verstellt wird, wobei ein erster Hydraulikzylinder vorgesehen ist, der den Brühkammerboden vor und/oder während der Getränkeherstellung in Richtung eines, die Brühkammer verschließenden Brühkopf kraftbeaufschlagt.

Erfindungsgemäß ist vorgesehen, dass in dem ersten Hydraulikzylinder ein zweiter Hydraulikzylinder angeordnet ist, wobei der zweite Hydraulikzylinder zusammen mit dem ersten Hydraulikzylinder teleskopartig verstellt wird und eine Verstellung des Brühkammerbodens bewirkt, sodass die Hydraulikzylinder gemeinsam den Brühkammerboden bis zu einem oberen Rand der Brühkammerwand in die Ausstoßposition verstellen.

Bevorzugt kann vorgesehen sein, dass die Tamperposition erreicht wird, indem lediglich der erste Hydraulikzylinder verstellt wird.

Bezüglich weiterer Vorteile und vorteilhafte Wirkungen wird auf die vorangehende Beschreibung verwiesen.

In einer vorteilhaften Ausführungsform des Verfahrens kann vorgesehen sein, dass mittels der Antriebsmechanik die Brühkammer in eine Brühposition verstellt wird, insbesondere bevor der Brühkammerboden in eine Tamperposition verstellt wird, wobei die Antriebsmechanik allein, insbesondere ohne ein Verstellen der/des Hydraulikzylinders, die Brühkammer, insbesondere die Brühkammerwand, zur dichtenden Anlage an dem Brühkopf bringt.

Gemäß einer weiteren, besonders vorteilhaften Ausführungsform kann vorgesehen sein, dass der zweite Hydraulikzylinder aktiviert wird, wenn der erste Hydraulikzylinder einen zugeordneten Anschlag erreicht, der den Hub des ersten Hydraulikzylinders begrenzt und der Innendruck in den Hydraulikzylindern weiter steigt.

Gemäß einer weiteren, besonders vorteilhaften Ausgestaltung des Verfahrens kann vorgesehen sein, dass in einem Zwischenspülverfahren, bevorzugt zwischen einzelnen Getränkeherstellungen, die Antriebsmechanik die Brühkammer in eine erste Spülstellung verstellt, wobei in der ersten Spülstellung die Brühkammer in einer Verschlussposition verharrt und ein Auslassventil, insbesondere ein Cremaventil, des Brühkopfes, bevorzugt durch die Brühkammer, zwangsgeöffnet wird oder umgangen wird, sodass eine Spülung der Brühkammer ermöglicht wird, ohne dass ein Innendruck in der Brühkammer aufgebaut wird.

Weiterhin kann vorteilhaft vorgesehen sein, dass in einem Aufheizspülverfahren, bevorzugt nach dem Einschalten der Getränkezubereitungsvorrichtung, die Antriebsmechanik die Brühkammer in eine zweite Spülstellung verstellt, wobei in der zweiten Spülstellung die Brühkammer in eine Verschlussposition verharrt und ein Auslassventil, insbesondere ein Cremaventil, des Brühkopfes erst beim Überschreiten eines Grenzdrucks im Inneren der Brühkammer öffnet, sodass eine Spülung der Brühkammer gegen einen Innendruck der Brühkammer durchgeführt wird.

Die oben genannten Aufgabe wird auch durch ein Verfahren zum Betrieb einer Getränkezubereitungsvorrichtung, insbesondere eines Kaffee- und/oder Espressovollautomatens gelöst, der eine, insbesondere entnehmbare, Brüheinheit sowie einen festverbauten Antrieb zum Antrieb einer Antriebsmechanik der Brüheinheit aufweist, wobei der Antrieb der Getränkezubereitungsvorrichtung Kopplungsmittel zum bevorzugt lösbaren Koppeln mit der Brüheinheit umfasst.

Erfindungsgemäß ist dabei vorgesehen, dass bei einer bestehenden Kopplung zwischen der Getränkezubereitungsvorrichtung und der Brüheinheit der Antrieb, die Antriebsmechanik der Brüheinheit zur Ausführung eines Verfahrens gemäß einer der vorangehend beschriebenen Ausführungsform antreibt.

Die vorliegende Erfindung wird nachfolgend anhand von rein schematischen, vorteilhaften Ausführungsbeispielen zeigenden Zeichnungen beschrieben werden.

Darin zeigen:
- Fig. 1:: eine Schnittdarstellung durch eine erfindungsgemäße Brüheinheit in einer Mahlposition;
- Fig. 2:: einen Schnitt durch eine erfindungsgemäße Brüheinheit in einer Verschlussposition;
- Fig. 3:: eine schematische Schnittdarstellung durch eine erfindungsgemäße Brüheinheit in einer Brühposition;
- Fig. 4:: eine schematische Schnittdarstellung durch eine erfindungsgemäße Brüheinheit in einer Auswurfposition;
- Fig. 5:: eine schematische Schnittdarstellung durch eine erfindungsgemäße Brüheinheit in einer ersten Spülstellung;
- Fig. 6:: eine schematische Schnittdarstellung durch eine erfindungsgemäße Brüheinheit in einer zweiten Spülposition;
- Fig. 7:: eine schematische Perspektivdarstellung einer Brüheinheit in einer Getränkezubereitungsvorrichtung;
- Fig. 8:: eine schematische Schnittdarstellung im Bereich einer Kopplung von Brüheinheit und Getränkezubereitungsvorrichtung .

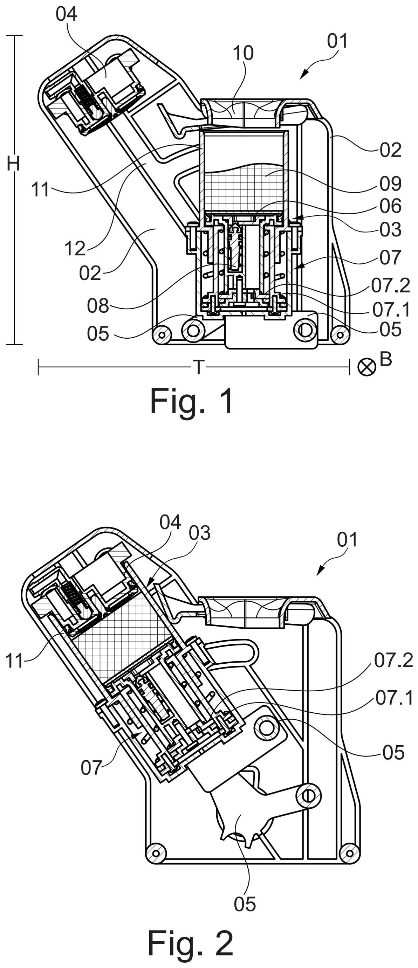

Die Fig. 1 zeigt eine erfindungsgemäße Brüheinheit 01, die ein Gehäuse 02, eine Brühkammer 03, einen Brühkopf 04 sowie eine Antriebsmechanik 05aufweist, wobei letztere dazu eingerichtet ist die Brühkammer 03 zu verschwenken und/oder linear zu verfahren.

Die Brühkammer 03, insbesondere ein Brühkammerboden 06 steht in direkter mechanischer Wirkverbindung mit einem Hydraulikzylinder 07. Der Hydraulikzylinder 07 ist auf einer Eingangsseite mit einem Brühfluidzufluss fluidleitend verbunden, der nicht im Detail dargestellt ist. Auf einer Ausgangsseite weist der Hydraulikzylinder 07 ein Gegendruckventil 08 auf, dass ermöglicht, dass Hydraulikfluid, welches bevorzugt auch als Brühfluid fungiert und in einem unverzweigten Fluidpfad die Brüheinheit 01 durchströmt, aus dem Hydraulikzylinder 07 abfließt und in die Brühkammer 03 strömt. Der Innendruck im Hydraulikzylinder 07, bei dem ein Durchfluss von Hydraulikfluid/Brühfluid in die Brühkammer 03 freigegeben wird, wird somit über die Eigenschaften des Gegendruckventils 08 bestimmt. Über die unmittelbare Einwirkung auf den Brühkammerboden 06 wird damit über das Gegendruckventil 08 auch ein Vorverdichten des Getränkesubstratmehls 09, beispielsweise Kaffeebohnenmehl, definiert. Auch der Druck auf die Brühkammer 03 während des Brühens wird über das Gegendruckventil 08 mitgesteuert, weil nur während des geöffneten Gegendruckventils 08 Brühfluid in die Brühkammer 03 strömen kann. In der Fig. 1 bereits angedeutet ist, dass es sich bei dem Hydraulikzylinder 07 in der Tat um einen ersten Hydraulikzylinder 07.1 und einen zweiten Hydraulikzylinder 07.2 handelt, wobei der zweite Hydraulikzylinder 07.2 so in Serie zum und/oder in dem ersten Hydraulikzylinder 07.1 angeordnet ist dass die Hydraulikzylinder 07.1, 07.2 zusammen eine teleskopartige Verstellung des Brühkammerboden 06 ermöglicht, wobei die Hydraulikzylinder 07.1, 07.2 gemeinsam eine Verstellung des Brühkammerbodens 06 bis zu einem oberen Rand der Brühkammerwand 11 ermöglichen. Die Verstellung oder Aktivierung der Hydraulikzylinder 07.1, 07. 2 wird im Zusammenhang mit den Fig. 2 bis 6 noch näher erläutert werden.

In der Darstellung der Fig. 1 befindet sich die Brüheinheit 01 in einer Mahlposition. Das Gehäuse 02 weist eine Befüllöffnung 10 auf, über die, beispielsweise schwerkraftbedingt, Getränkesubstratmehl 02 von einer Mahleinheit - in der Figur 1 nicht dargestellt - in die Brüheinheit 01 eingefüllt werden kann. In der Brühposition der Fig. 1 kann der Hydraulikzylinder entleert sein. Es kann aber auch vorgesehen sein, dass der Hydraulikzylinder 07 zu Beginn des Mahl- oder Befüllvorgangs mit einer Restmenge von Hydraulikfluid gefüllt ist und abhängig von dem herzustellenden Getränk und der dementsprechenden Ansteuerung der geräteseiteigen, nicht dargestellten Mahleinheit eventuell die Restmenge abgelassen oder verdängt wird, zum Beispiel, wenn eine besonders große Menge Getränkesubstratmehl eingefüllt werden soll. Dadurch kann bei moderaten Portionen von Getränkesubstratmehl der anschließende Brühvorgang schneller durchgeführt werden, weil weniger zusätzliches Fluid in den Hydraulikzylinder eingefüllt werden muss, beispielsweise um die Brühposition zu erreichen.

Vorteilhaft wird mit einem mechanischen Antriebsmechanik 05 in Kombination mit dem Hydraulikzylinder 07 insgesamt eine sehr kompakte Bauweise der Brüheinheit 01 möglicht.

In der Fig. 2 ist die erfindungsgemäße Brüheinheit in einer Verschlussposition dargestellt. Es ist erkennbar, dass der Hydraulikzylinder 07, weder der erste Hydrualikzylinder 07.1 noch der zweite Hydraulikzylinder 07.2 gefüllt ist. Die Brühkammer 03, insbesondere die Brühkammerwand 11 liegt dichtend an dem Brühkopf 04 an und verschließt damit die Brühkammer 03. In besonders vorteilhafter Weise kann das Verschließen der Brühkammer - der Übergang von der Darstellung der Fig. 1 zur Darstellung der Fig. 2 - kraftlos erfolgen. Dies bedeutet, dass keine mechanischen Rückstellkräfte, Federkräfte oder dergleichen überwunden werden müssen, um den Zustand der Fig. 2 zu erreichen.

Besonders vorteilhaft kann vorgesehen sein, dass ein Verfahrweg zum linearen Verfahren der Brühkammer 03, beispielsweise entlang der in der Fig. 1 dargestellten Führung 12 weniger als 60mm, bevorzugt weniger als 50 mm, beträgt. Durch einen kurzen Verfahrweg kann sichergestellt werden, dass die oben genannten maximalen Abmessungen und das maximale Volumen eingehalten werden und dass das Erreichen der unterschiedlichen Positionen der Brüheinheit innerhalb kurzer Zeitintervalle ermöglicht wird. Besonders vorteilhaft lässt sich ein geringer Verfahrweg von weniger als Z cm mit einem Hydraulikzylinder 07 kombinieren. In der Fig. 2 ist erkennbar, dass die Antriebsmechanik 05 der Brüheinheit 01 so ausgebildet ist, dass die Brühkammer 03 in die dargestellte Verschlussposition überführt werden kann. Einzig und allein dadurch, dass die Antriebsmechanik betätigt oder verstellt wird und insbesondere ohne dass der Hydraulikzylinder betätigt, befüllt oder verstellt wird.

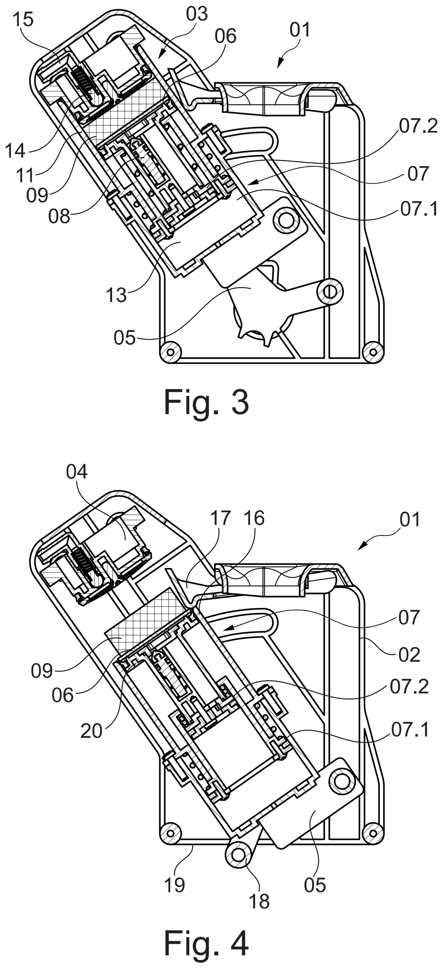

In der Fig. 3 ist die Brüheinheit 01 in einer Brühposition dargestellt. Es ist erkennbar, dass im Hydraulikzylinder 07, der bevorzugt und platzsparend ein unteres Ende der Brühkammer 03 ausbilden kann, in einem unteren Bereich 13 ein Hydraulikfluid, bevorzugt ein Brühfluid mit gleichzeitiger Funktionalität als Hydraulikfluid eingefüllt ist. Dadurch wird der erste Hydraulilkyzylinder 07.1 verstellt und der Brühkammerboden angehoben. Der zweite Hydraulikzylinder 07. 2 bleibt unverstellt und unbefüllt, da dieser einen kleineren Durchmesser aufweist und daher erst verstellt wird, wenn der erste Hydraulikzylinder 07.1 eine Maximalverstellung erreicht hat und der Innendruck in den Hydraulikzylindern 07.1, 07.2 weiter steigt.

Dementsprechend ist in der Fig. 3 der Brühkammermoden 06 innerhalb der Brühkammer 03, insbesondere gegenüber der Brühkammerwand 11 gegenüber der Situation oder Position der Fig. 2 verstellt worden. Dies führt dazu, dass das Getränkesubstratmehl 09 innerhalb der Brühkammer 03 zwischen Brühkopf 04 und Brühkammerboden 06 komprimiert oder getampert wird. Die mechanische Antriebsvorrichtung kann in einen überstreckten oder ansonsten gesicherten Zustand befindlich sein, um sicherzustellen, dass die Antriebsmechanik 05 und/oder der geräteseitige Antrieb zur Erreichung der Brühposition kraftlos und/oder energielos geschaltet werden kann/können und gleichzeitig die Antriebsmechanik 05 als Wiederlager für die Kräfte des Hydraulikzylinders 07 fungieren kann.

Sobald der Innendruck im Hydraulikzylinder 07, insbesondere im unteren Bereich 13 ein Grenzdruck überschreitet, öffnet das Gegendruckventil 08 und das Hydraulikfluid oder Brühfluid kann in die Brühkammer 03 einströmen, beispielsweise durch einen Brühkammerboden 06 mit einer Lochung oder Perforierung. Daraufhin steigt der Innendruck innerhalb der Brühkammer 03 an, bis ein Auslassventil 14, das mitunter auch als Cremaventil bezeichnet wird, geöffnet wird. Das Auslassventil 14 kann ebenfalls als Gegendruckventil ausgebildet sein und selbstständig oder selbsttätig öffnen, wenn innerhalb der Brühkammer 03 ein ausreichender Druck vorherrscht oder aufgebaut ist. Über den an das Auslaufventil 14 anschließenden Auslauf 15 kann ein innerhalb der Brühkammer 03 erzeugtes Getränk ausgegeben werden. Zum Druckaufbau im Hydraulikzylinder 07 und/oder der Brühkammer kann eine nicht dargestellt, geräteseitige Pumpe dienen, die Fluid, im Fall eines Brühvorgangs bevorzugt heißes Wasser, in und durch die Komponenten der Brüheinheit 01 pumpt.

In der Fig. 4 ist eine Auswurfposition der Brüheinheit 01 dargestellt. Es ist erkennbar, dass die Antriebsmechanik 05 gegenüber der Position der Fig. 3 und 4 linear zurück oder vom Brühkopf 04 weg bewegt wurde. Ein Verschwenken zurück in die Mahlposition der Fig. 1 hat noch nicht stattgefunden. Stattdessen ist eine zusätzliche Betätigung oder Verstellung des Hydraulikzylinders 07 erfolgt und dargestellt. In der Ausführungsform der Fig. 4 ist der zweite Hydraulikzylinder 07.2 teleskopartig zusammen mit dem ersten Hydraulikzylinder 07.1 verstellt und mit Hydraulikfluid gefüllt.

Der zweite Einzelzylinder 07.2 umfasst einen geringeren Durchmesser oder Querschnitt als der erste Einzelzylinder 07.1. Weiterhin kann der erste Einzelzylinder 07.1 ein Anschlag aufweisen, der den Hub des ersten Einzelzylinders 07.1 begrenzt. Da die Brühkammer 03 geöffnet ist, entwickelt sich kein Gegendruck zum Innendruck der Hydraulikzylinder 07.1, 07.2. Beim Einfüllen von Hydraulikfluid in den ersten Hydraulikzylinder 07. 1 fährt dieser bei, ausreichendem Volumen, bis an einen nicht dargestellten Anschlag. Weiter einströmendes Fluid führt dauz, dass der zweite Hydraulikzylinder 07.2 verstellt und gefüllt wird. In der Darstellung der Fig. 4 ist erkennbar, dass über ein Füllen oder Betätigen der beiden Einzelzylinder 07.1, 07.2 der Brühkammerboden 06 so höhenverstellbar gegenüber der Brühkammer 03 oder der Brühkammerwand 11 ist, so dass der Brühkammerboden 06 bis an einen oberen Rand 16 der Brühkammerwand 11 verstellt werden kann. Dies ermöglicht dann, dass ein Auswerfer 17, der bevorzugt als Abstreifer ausgebildet sein kann, zum Abschluss eines Getränkebezugs oder Brühvorgangs den ausgelaugten Trester oder das verbleibende Getränkesubstratmehl 09 auswerfen kann. Die Position des Brühkammerbodens 06 kann mittels eines Magneten 20 in Verbindung mit einem geräteseiteigen - nicht dargestellten - Reed-Sensor erfasst werden.

Die Möglichkeit eines hydraulischen Auswurfs des Getränkesubstratmehls 09 nach dem Brühvorgang ermöglicht weiterhin in vorteilhafterweise eine sehr kompakte Ausgestaltung der Brüheinheit 01. In der Fig. 4 ist nochmals erkennbar, dass der Hydraulikzylinder 07 das untere Ende der Brühkammer 03 ausbildet. Besonders vorteilhaft ist, dass keine zusätzlichen Bauteile, wie beispielsweise ein Stößel, zum Verstellen des Brühkammerbodens 06 bodenseitig über den Hydraulikzylinder 07 hervorragt oder übersteht. Dies bedeutet auch, dass der Bauraum, der zum Einbau der Brüheinheit 07 vorgesehen werden muss ausschließlich oder zumindest ganz wesentlich durch das Gehäuse 02 der Brüheinheit definiert wird und kein zusätzlicher Bauraum vorgesehen werden muss, für Bauteile, die zu gewissen Zeitpunkten des Brühvorgangs wesentlich aus der Brüheinheit 01 oder aus dem Gehäuse 02 der Brüheinheit 01 hervorstehen oder überstehen.

Eine geringfügige Ausnahme bildet ein Hebel 18 der Antriebsmechanik 05, der in der Auswurfposition der Fig. 4 geringfügig über ein Bodenteil 19 des Gehäuses 02 der Brüheinheit 01 übersteht. So kann im Bereich des Bodenteils 19 eine nicht im Detail dargestellte Öffnung oder Ausnehmung im Gehäuse 02 realisiert sein. Abgesehen von einem zeitweisen Hervorstehen oder Überstehen des Hebels 18 kann die Brüheinheit 01 jedoch so realisiert sein, dass keine Bauteile oder Komponenten über die einhüllende Kontur des Gehäuses 02 überstehen oder hervorragen.

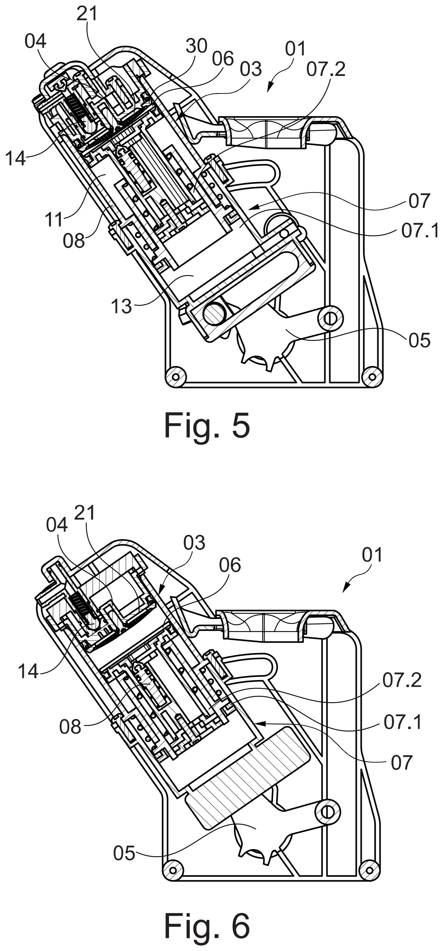

In der Fig. 5 ist eine erste Spülposition der Brüheinheit und/oder der Brühkammer dargestellt. Über die Antriebsmechanik 05 wird die ersten Spülstellung der Brühkammer 03 erreicht. In der ersten Spülstellung der Fig. 5 ist das Auslassventil 14, insbesondere ein Cremaventil, des Brühkopfes 04, bevorzugt durch die Position der Brühkammer 03 selbst mechanisch zwangsgeöffnet oder umgehbar, sodass eine Spülung der Brühkammer 03 ermöglicht wird, ohne dass ein Innendruck in der Brühkammer 03 aufgebaut wird. Dabei wird beim Einströmen von Hydraulikfluid in die Hydraulikzylinder 07.1, 07.2 eine Verstellung beider Hydraulikzylinder bewirkt, weil, ähnlich wie in der Situation der Fig. 4, durch das geöffnete Auslassventil 14 und in Ermanglung von Wiederstand durch Getränkesubstratmehl 09 kein Gegendruck auf die Hydraulikzylinder wirkt. Der Brühkammerboden 06 wird fast bis an eine Innenoberfläche 21 des Brühkopfes 04 verstellt, bis er an einer Anschlagsfläche 30 zur Anlage kommt. Dann öffnet abermals beim Überschreiten des Grenzdrucks des Überdrückventils 08 die Fluidverbindung zwischen Hydraulikzylinder 07 und Brühkammer 03 und die Spülung kann mit minimalem Volumen durchgeführt werden.

In der Fig. 6 ist eine zweit Spülposition der Brüheinheit und/oder der Brühkammer dargestellt. Die Position der Brühkammer 03 und der Antriebsmechanik 05 entspricht im Wesentlichen der Brühposition der Fig. 3. Der Hauptunterschied besteht darin, dass kein Getränkesubstratmehl 09 in der Brühkammer 03 eingefüllt ist. Es kommt beim Pumpen von Hydraulikfluid oder Brühfluid in die Brüheinheit 01 dazu, dass sich bei der anfänglichen Verstellung des ersten Hydraulikzylinders 07.1 in der verschlossenen Brühkammer 03 ein verdichtetes Luftkissen ausbildet/ansammelt, was ähnlich wirkt, wie Getränkesubstratmehl. Dadurch wird sichergestellt, dass der zweite Hydraulikzylinder 07.2 nicht aktiviert wird und das Gegendruckventil 08 bereits öffnet, wenn zwischen Brühkopf 04, insbesondere Innenoberfläche 21 und Brühkammerboden 06 noch ein merklicher Abstand besteht und dadurch auch ein größeres Brühkammervolumen mit mehr Spülfluid gespült wird. Dadurch kann besser oder effektiver Wärme an die Brühkammer abgegeben werden, weshalb sich die zweite Spülposition besonders für eine Initialspülung beim Einschalten der Getränkezubereitungsvorrichtung eignet, um die Brühkammer 03 vorzuwärmen und anschließend ein Getränk mit ausreichend hoher Temperatur erzeugen zu können.

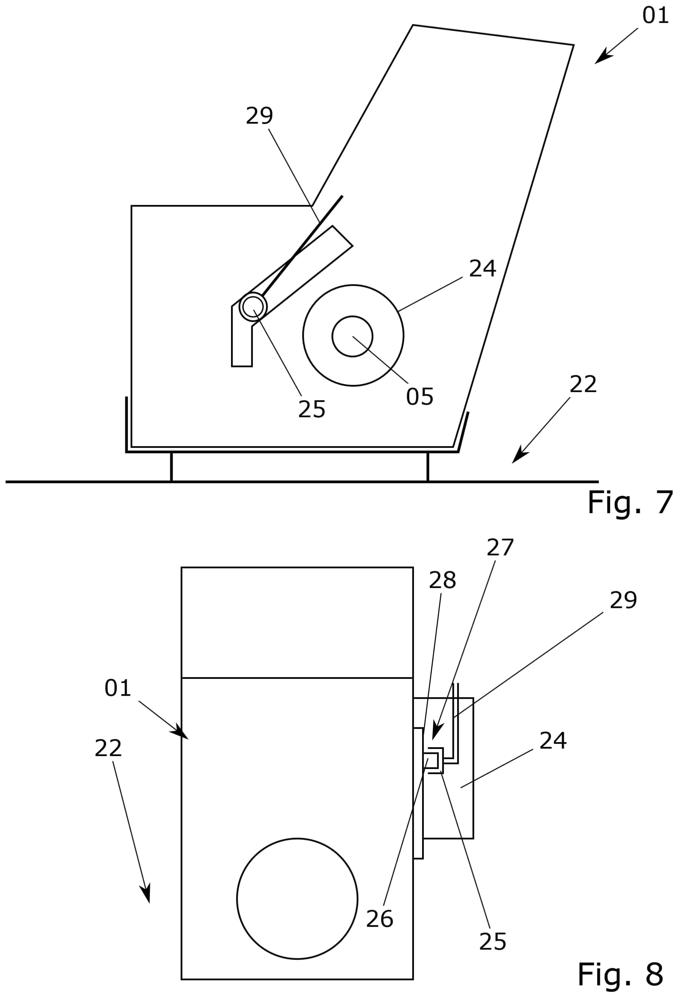

Fig. 7 zeigt eine Seitenansicht einer Brüheinheit 01, die in eine Getränkezubereitungsvorrichtung 22 eingesetzt ist. Bei dem Beispiel der Fig. 7 handelt es sich um eine Ausführungsform mit einem elektrischen Antrieb. Es kann alternativ jedoch auch vorgesehen sein, dass der Antrieb manuell und/oder handbetrieben ausgeführt ist. Es sind nur ein gewisser Teile der Getränkezubereitungsvorrichtung 22 gezeigt, nämlich der elektromotorische Antrieb 24 und eine geräteseitige Koppelstelle 25, einer Fluidzuleitung 29 der Getränkezubereitungsvorrichtung 22. Die Koppelstelle 25 ist passiv ausgebildet und wird nicht aktiv bewegt oder angetrieben. Der Antrieb 24 ist mit der Antriebsmechanik 05 der Brüheinheit 01 lösbar gekoppelt und bewirkt die Verstellung der nicht im Detail dargestellten Brühkammer, wie vorangehend beschrieben.

Fig. 8 zeigt in einer Draufsicht auf die eingesetzte Brüheinheit 01 die Kopplung zwischen der geräteseitigen Koppelstelle 25 und der Koppelstelle 26 der Brüheinheit 01. Die Kopplung mittels der Koppelstellen 25, 26 wird als Steckverbindung 27 ausgebildet, wobei die Kopplung permanent besteht, solange die Brüheinheit 01 in der Getränkezubereitungsvorrichtung 22 eingesetzt ist. Die Kopplung wird nicht abhängig von der Position der Brühkammer 03 in der Brüheinheit 01 hergestellt und gelöst. Der Antrieb 24 wirkt auf die nicht dargestellte Antriebsmechanik. Diese wirkt auf die Brühkammer 03, mit der die Koppelstelle 26 unbeweglich verbunden ist. Damit verursacht der Antrieb 24 die Bewegung der Koppelstelle 26, insbesondere entlang der Führung 28. Wenn die Brüheinheit 01 - zum Beispiel zu Reinigungszwecken - aus der Getränkezubereitungsvorrichtung 22 entnommen wird, wird die Kopplung der Koppelstellen 25, 26 gelöst.

### Bezugszeichen

- 01: Brüheinheit
- 02: Gehäuse
- 03: Brühkammer
- 04: Brühkopf
- 05: Antriebsmechanik
- 06: Brühkammerboden
- 07: Hydraulikzylinder
- 08: Gegendruckventil
- 09: Getränkesubstratmehl
- 10: Befüllöffnung
- 11: Brühkammerwand
- 12: Führung
- 13: Bereich des Hydraulikzylinders
- 14: Auslassventil
- 15: Auslauf
- 16: Rand
- 17: Auswerfer
- 18: Hebel
- 19: Bodenteil
- 20: Magnet
- 21: Innenoberfläche
- 22: Getränkezubereitungsvorrichtung

- 24: Antrieb
- 25: Koppelstelle der Getränkezubereitungsvorrichtung
- 26: Koppelstelle der Brüheinheit
- 27: Steckverbindung
- 28: Führung
- 29: Fluidzuleitung der Getränkezubereitungsvorrichtung
- 30: Anschlagfläche

## Patentansprüche

1. Brüheinheit für eine Getränkezubereitungsvorrichtung (22), insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brühkammer (03) einen verschiebbar gegenüber einer Brühkammerwand (11) gelagerten Brühkammerboden (06) aufweist, wobei ein erster Hydraulikzylinder (07.1) vorgesehen ist, der den Brühkammerboden (06) vor und/oder während der Getränkeherstellung in Richtung eines, die Brühkammer (03) verschließenden Brühkopfes (04) kraftbeaufschlagt,
**dadurch gekennzeichnet,**
**dass** in dem ersten Hydraulikzylinder (07.1) ein zweiter Hydraulikzylinder (7.2) angeordnet ist, der zusammen mit dem ersten Hydraulikzylinder (07.1) eine teleskopartige Verstellung des Brühkammerboden (06) ermöglicht, wobei die Hydraulikzylinder (07.1, 07.2) gemeinsam eine Verstellung des Brühkammerbodens (06) bis zu einem oberen Rand (16) der Brühkammerwand (11) ermöglichen.

2. Brüheinheit nach Anspruch 1,
**dadurch gekennzeichnet,**
**dass** die Antriebsmechanik (05) zur Verstellung der Brühkammer (03) in eine Brühpsoition eingerichtet ist, wobei die Antriebsmechanik (05) so ausgebildet ist, dass allein über die Antriebsmechanik (05), insbesondere ohne Verstellung der/des Hydraulikzylinders (07.1, 07.2) die Brühkammer (03), insbesondere die Brühkammerwand (11), zur dichtenden Anlage an dem Brühkopf (04) bringbar ist.

3. Brüheinheit nach Anspruch 1 oder 2,
**dadurch gekennzeichnet,**
**dass** der erste Hydraulikzylinder (07.1) und/oder der zweite Hydraulikzylinder (07.2) mit einer Federeinheit vorgespannt ist/sind, die einem Ausfahren der/des Hydraulikzylinder(s) (07.1, 07.2) entgegenwirken.

4. Brüheinheit nach einem der vorangehenden Ansprüche,
**dadurch gekennzeichnet,**
**dass** dem ersten Hydraulikzylinder (07.1) ein Anschlag zugeordnet ist, der den Hub des ersten Hydraulikzylinders (07.1) begrenzt und bei weiter ansteigendem Innendruck in den Hydraulikzylindern (07.1, 07.2) den zweiten Hydraulikzylinder (07.2) aktiviert.

5. Brüheinheit nach einem der vorangehenden Ansprüche,
**dadurch gekennzeichnet,**
**dass** der Anschlag so positioniert ist, dass der erste Hydraulikzylinder (07.1) den Anschlag nicht erreicht, wenn in der Brühkammer (03) zwischen Brühkammerboden (06) und Brühkopf (04) eine Mindestportion eines Getränkesubstratmehls (09), insbesondere Kaffeebohnenmehl, angeordnet ist.

6. Brüheinheit nach einem der vorangehenden Ansprüche,
**dadurch gekennzeichnet,**
**dass** der erster Hydraulikzylinder (07.1) und der zweite Hydraulikzylinder 07.2) einen, bevorzugt gemeinsamen, Fluideinlass aufweisen, der fluidleitend mit einer Brühfluidzuleitung der Getränkezubereitungsvorrichtung (22) verbindbar ist, wobei die Hydraulikzylinder (07.1, 07.2) mit einem ausgangsseiteigen Gegendruckventil (08) versehen sind, das in fluidleitender Verbindung mit der Brühkammer (03) ausgebildet ist, welches beim Überschreiten eines Grenzdrucks die Zufuhr von Brühfluid in die Brühkammer (03) freigibt, sodass Brühfluid aus den Hydraulikzylindern (07.1, 07.2) abfließt und in die Brühkammer (03) einströmt.

7. Brüheinheit nach einem der vorangehenden Ansprüche,
**dadurch gekennzeichnet,**
**dass** die Antriebsmechanik (05) zum Erreichen einer ersten Spülstellung der Brühkammer (03) eingerichtet ist, wobei in der ersten Spülstellung ein Auslassventil (14), insbesondere ein Cremaventil, des Brühkopfes (04), bevorzugt durch die Brühkammer (03), zwangsgeöffnet oder umgehbar ist, sodass eine Spülung der Brühkammer (03) ermöglicht wird, ohne dass ein Innendruck in der Brühkammer (03) aufgebaut wird.

8. Brüheinheit nach einem der vorangehenden Ansprüche,
**dadurch gekennzeichnet,**
**dass** während eines Spülens der Brühkammer in einer ersten Spülstellung der Brühkammer (03) der erster und der zweite Hydraulikzylinder (07.1, 07.2) befüllt sind und der Brühkammerboden (06) einen minimalen Abstand vom Brühkopf (04), bevorzugt einen Abstand von weniger als 2mm, besonders bevorzugt von weniger als 1mm, aufweist.

9. Brüheinheit nach einem der vorangehenden Ansprüche,
**dadurch gekennzeichnet,**
**dass** der Antriebsmechanik (05) zum Erreichen einer zweiten Spülstellung der Brühkammer (03) eingerichtet ist, wobei in der zweiten Spülstellung ein Auslassventil (14), insbesondere ein Cremaventil, des Brühkopfes (04) erst beim Überschreiten eines Grenzdrucks öffnet, sodass eine Spülung der Brühkammer (03) ermöglicht wird, gegen einen Innendruck der Brühkammer.

10. Getränkezubereitungsvorrichtung, insbesondere Kaffee- und/oder Espressovollautomat, mit einer, insbesondere entnehmbaren, Brüheinheit (01) und einem fest verbauten Antrieb (24) zum Antrieb einer Antriebsmechanik der Brüheinheit, wobei der Antrieb (24) Kopplungsmittel zum, bevorzugt lösbaren, Koppeln mit der Brüheinheit umfasst,
**dadurch gekennzeichnet,**
**dass** die Brüheinheit (01) nach einem der Ansprüche 1 bis 9 ausgebildet ist.

11. Getränkezubereitungsvorrichtung nach Anspruch 10 ,
**gekennzeichnet durch**,
eine Sensorik zur Bestimmung der Position des Brühkammerbodens, insbesondere zur Erkennung des Erreichens des Brühkammerbodens an einem oberen Rands (16) der Brühkammerwand (11).

12. Getränkezubereitungsvorrichtung nach Anspruch 10 oder 11,
**dadurch gekennzeichnet,**
**dass** eine lösbare Koppelung eine Brühfluidzuleitung (29) der Getränkezubereitungsvorrichtung (22) mit der Brüheinheit (01) verbindet, wobei die Koppelung eine Koppelstelle (26) auf Seiten der Brüheinheit (01) und eine Koppelstelle (25) auf Seiten der Getränkezubereitungsvorrichtung (22) umfasst, und wobei die Koppelung beweglich gegenüber Brüheinheit (01) und Getränkezubereitungsvorrichtung (22) und unbeweglich gegenüber der Brühkammer (03) ausgebildet ist und dadurch zusammen mit der Brühkammer (03) verstellt wir, wobei insbesondere die Koppelstelle (25) der Getränkezubereitungsvorrichtung (22) von der Koppelstelle (26) der Brüheinheit (01) angetrieben wird.

13. Getränkezubereitungsvorrichtung nach einem der Ansprüche 10 bis 12,
**dadurch gekennzeichnet,**
**dass** die Koppelung ausschließlich zur Entnahme der Brüheinheit (01) aus der Getränkezubereitungsvorrichtung (22) lösbar ist.

14. Verfahren zum Betrieb einer Brüheinheit für eine Getränkezubereitungsvorrichtung, insbesondere einen Kaffee- und/oder Espresspvollautomaten, bei dem mit einer Antriebsmechanik (05) eine Brühkammer (03) zwischen mehreren Positionen verschwenkt und/oder linear verfahren wird, wobei die Brühkammer (03) einen verschiebbar gegenüber einer Brühkammerwand (11) gelagerten Brühkammerboden (06) aufweist, der während einer Getränkeherstellung in eine Tamperposition und zum Abschluss der Getränkeherstellung in eine Ausstoßposition verstellt wird, wobei ein erster Hydraulikzylinder (07.1) vorgesehen ist, der den Brühkammerboden (06) vor und/oder während der Getränkeherstellung in Richtung eines, die Brühkammer (03) verschließenden Brühkopfes (04) kraftbeaufschlagt,
**dadurch gekennzeichnet,**
**dass** in dem ersten Hydraulikzylinder (07.1) ein zweiter Hydraulikzylinder (07.2) angeordnet ist, wobei der zweite Hydraulikzylinder (07.2) zusammen mit dem ersten Hydraulikzylinder (07.1) teleskopartig verstellt wird und eine Verstellung des Brühkammerboden (06) bewirkt, so dass die Hydraulikzylinder (07.1, 07.2) gemeinsam den Brühkammerboden (06) bis zu einem oberen Rand (16) der Brühkammerwand (11) in die Ausstoßposition verstellen.

15. Verfahren nach Anspruch 14,
**dadurch gekennzeichnet,**
**dass** mittels der Antriebsmechanik (05) die Brühkammer (03) in eine Brühposition verstellt wird, insbesondere bevor der Brühkammerboden (06) in die Tamperposition verstellt wird, wobei die Antriebsmechanik (05) allein, insbesondere ohne eine Verstellung der/des Hydraulikzylinders (07.1, 07.2), die Brühkammer (03), insbesondere die Brühkammerwand (11), zur dichtenden Anlage an dem Brühkopf (04) bringt.

16. Verfahren nach Anspruch 14 oder 15,
**dadurch gekennzeichnet,**
**dass** der zweite Hydraulikzylinder (07.2) aktiviert wird, wenn der erste Hydraulikzylinder (07.1) einen zugeordneten Anschlag erreicht, der den Hub des ersten Hydraulikzylinders (07.1) begrenzt und der Innendruck in den Hydraulikzylindern (07.1, 07.2) weiter steigt.

17. Verfahren nach einem der Ansprüche 14 bis 16,
**dadurch gekennzeichnet,**
**dass** in einem Zwischenspülverfahren, bevorzugt zwischen einzelnen Getränkeherstellungen, die Antriebsmechanik (05) die Brühkammer (03) in eine erste Spülstellung verstellt, wobei in der ersten Spülstellung ein Auslassventil (14), insbesondere ein Cremaventil, des Brühkopfes (04), bevorzugt durch die Brühkammer (03), zwangsgeöffnet wird oder umgangen wird, sodass eine Spülung der Brühkammer (03) ermöglicht wird, ohne dass ein Innendruck in der Brühkammer (03) aufgebaut wird.

18. Verfahren nach einem der Ansprüche 14 bis 17,
**dadurch gekennzeichnet,**
**dass** in einem Aufheizspülverfahren, bevorzugt nach dem Einschalten der Getränkezubereitungsvorrichtung, die Antriebsmechanik (05) die Brühkammer (03) in eine zweite Spülstellung verstellt, wobei in der zweiten Spülstellung ein Auslassventil (14), insbesondere ein Cremaventil, des Brühkopfes (04) erst beim Überschreiten eines Grenzdrucks öffnet, sodass eine Spülung der Brühkammer (03) gegen einen Innendruck der Brühkammer (03) durchgeführt wird.

19. Verfahren zum Betrieb einer Getränkezubereitungsvorrichtung, insbesondere eines Kaffee- und/oder Espressovollautomat, mit einer, insbesondere entnehmbaren, Brüheinheit (01) und einem fest verbauten Antrieb (24) zum Antrieb einer Antriebsmechanik (05) der Brüheinheit (03), wobei der Antrieb (24) Kopplungsmittel zum, bevorzugt lösbaren, Koppeln mit der Brüheinheit (01) umfasst,
**dadurch gekennzeichnet,**
**dass** bei einer bestehenden Kopplung zwischen Getränkezubereitungsvorrichtung (22) und Brüheinheit (01) der Antrieb (24) den Antriebsmechanik (05) der Brüheinheit (01) zur Ausführung eines Verfahrens gemäß einem der Ansprüche 14 bis 18 antreibt.
